Europäisches Patentamt

European Patent Office

Office européen des brevets

(19)

(11) **EP 0 946 443 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.⁷: **C03C 17/32**, C08K 5/00

(21) Anmeldenummer: 97913105.9

(86) Internationale Anmeldenummer:
**PCT/DE97/02387**

(22) Anmeldetag: **16.10.1997**

(87) Internationale Veröffentlichungsnummer:
**WO 98/17595 (30.04.1998 Gazette 1998/17)**

(54) **VERFAHREN ZUR HERSTELLUNG EINES THERMOOPTISCHEN VARIABLEN POLYMERWERKSTOFFES UND SEINE ANWENDUNG**

METHOD FOR PRODUCING A THERMOOPTICAL VARIABLE POLYMERIZED MATERIAL, AND USE OF SAME

MODE DE FABRICATION D'UN MATERIAU POLYMERISE THERMOOPTIQUE VARIABLE ET SON APPLICATION

(84) Benannte Vertragsstaaten:
**BE CH DE ES FR GB IT LI LU NL**

(30) Priorität: **17.10.1996 DE 19642886**

(43) Veröffentlichungstag der Anmeldung:
**06.10.1999 Patentblatt 1999/40**

(73) Patentinhaber:
• **FRAUNHOFER-GESELLSCHAFT ZUR FÖRDERUNG DER ANGEWANDTEN FORSCHUNG E.V.**
**80636 München (DE)**
• **Gips-Schüle-Stiftung**
**70372 Stuttgart (DE)**

(72) Erfinder:
• **BICER, Taner**
**D-70569 Stuttgart (DE)**
• **GÖDEKE, Holger**
**D-88480 Achstetten (DE)**
• **WERNER, Jürgen**
**D-70569 Stuttgart (DE)**
• **SCHÖNFELD, Uwe**
**D-72414 Rangendingen (DE)**

(74) Vertreter: **Pfenning, Meinig & Partner**
**Mozartstrasse 17**
**80336 München (DE)**

(56) Entgegenhaltungen:
**EP-B- 0 000 868        EP-B- 0 014 826**
**DE-A- 4 433 090**

**Beschreibung**

Die Erfindung betrifft ein Verfahren zur Herstellung eines neuartigen thermooptischen Polymerwerkstoffes, der ein Matrixpolymer enthält, das mindestens eine mit diesem Matrixpolymer nicht mischbare, durch Temperaturerhöhung in seiner Struktur beeinflußbare thermotrope Verbindung einschließt, wobei sich der Brechungsindex bei der Strukturänderung ändert und somit ein optischer Zustandswechsel transluzent/nichttransluzent stattfindet, sowie die Verwendung derartiger thermooptischer Polymerwerkstoffe.

Aus dem Stand der Technik sind bereits - vor allem in Zusammenhang mit der Schattierung von Glasflächen - verschiedene polymere thermooptische Systeme bekannt.

Das erste Prinzip ist die temperaturabhängige Anlagerung von Wasser an Makromoleküle durch polare Wechselwirkung. Mit zunehmender Temperatur wird das polargebundene Wasser abgespalten und bildet im Kunststoff eine stark lichtstreuende Dispersion aus kleinsten Wassertröpfchen. Dieser Vorgang ist reversibel temperaturabhängig. Durch Beimischung unterschiedlicher Substanzen zum Kunststoff können dessen Eigenschaften, wie z.B. die Temperatur, bei der die Wasserabspaltung eintritt, gezielt beeinflußt werden. Diese Systeme weisen jedoch eine unzureichende Langzeitstabilität auf.

Eine zweite Entwicklung beruht auf einem thermotropen Gel, das hauptsächlich aus kolloidalen Teilchen eines Polyäther-Wasser-Gemisches besteht, welches von einer Gelschicht aus einer Vinyl-Carboxyl-Wassermischung umschlossen wird. Dabei dient als Lösungsvermittler eine Tensidoberfläche. Beim Überschreiten einer kritischen Temperatur wird zum einen das an die Makromoleküle gebundene Wasser ins äußere Lösungsmittel abgespalten. Gleichzeitig läuft eine temperaturabhängige Verfilzung der Makromoleküle ab. Neben diesem Teilchenwachstum wird zusätzlich die relative Brechzahl der Partikel durch die Wasserabspaltung erhöht (**Meinhardt, S.:** Gel mit temperaturabhängiger Lichtdurchlässigkeit; Europäische Patentschrift EU 86 904 133.5-2115, 1991). Für die obengenannten Systeme ist eine aufwendige Abdichttechnik notwendig, um eine entsprechende Langzeitstabilität zu erreichen.

Außer diesen Polymer/Wasser-Systemen sind auch Polymer/Polymer-Systeme bekannt, die eine temperaturabhängige Lichtdurchlässigkeit aufweisen. Im allgemeinen sind verschiedene Polymere infolge der geringen Mischungsentropie der langen Polymerketten und der positiven Mischungsenergie zwischen den Polymeren miteinander nicht mischbar. Die Mischbarkeit beliebiger Systeme wird von der freien Mischungsenergie bestimmt.

$$\Delta G_{mix} = \Delta H_{mix} - T \cdot \Delta S_{mix}$$

Dabei ist

$$\Delta H_{mix} = \text{Mischungsenthalpie}$$

$$\Delta S_{mix} = \text{Mischungsentropie}$$

$$\Delta G_{mix} = \text{freie Mischungsenergie}$$

Es existieren aus thermodynamischer Sicht drei Möglichkeiten für Polymermischungen:

a) Unmischbar (instabil)
b) Vollständig mischbar (stabil)
c) Teilweise mischbar (metastabil)

Insbesondere metastabile Systeme (c) neigen in Abhängigkeit von der Temperatur zu Entmischungen, die durch die beiden Minima gekennzeichnet sind. Demzufolge gibt es klare Polymermischungen, die beim Erwärmen entmischen und trüben. Bei vielen Systemen wird dieser Prozeß beim Abkühlen umgekehrt. Paul, D. R. et al., listete bereits 1980 eine Reihe von Mischungssystemen auf, die dieses Trübungsverhalten aufweisen (**Paul, D. R. et al.:** Journal of Molecular Science-Review Molecular Chemistry 18 (1980) H.1, S. 104-168). Die Eintrübung dient bei diesen Systemen als Nachweis für die Existenz einer sogenannten unteren kritischen Lösungstemperatur (lower critical solution temperature) LCST. Die LCST-Kurve kann dabei sowohl oberhalb als auch unterhalb der Glasübergangstemperatur der Polymermischung liegen. Polymere Mischungen, die beim Abkühlen eintrüben, weisen entsprechend eine obere kritische Lösungstemperatur (upper critical solution temperature) UCST auf.

Die Eintrübung der meisten verträglichen Polymermischungen, die ein LCST-Verhalten aufweisen, findet erst bei vergleichsweise hohen Temperaturen statt, die oft bereits eine Zersetzung der einzelnen Polymere hervorruft. So zeigt z.B. das System PMMA/PVDF einen Trübungspunkt von ca. 300°C.

Aus der DE 44 33 090 A1 ist ein thermooptischer Polymerwerkstoff bekannt, der aus mindestens einem Matrixpolymer und einer monomeren Verbindung besteht, wobei das Matrixpolymer und die monomere Verbindung so ausgewählt sind, daß ihre Brechungsindices im Temperaturbereich unterhalb der für die Strukturänderung maßgeblichen Temperatur bis zur Temperatur der Strukturänderung der monomeren Verbindung annähernd gleich sind und somit der Polymerwerkstoff in diesem Temperaturbereich transluszent und transparent ist. Als Matrixpolymere werden dabei Polyester vorgeschlagen und als Alkane vorzugsweise solche mit C10 bis C25.

Aus der EP 0 000 868 B1 sind ein Körper mit reversibel veränderlicher temperaturabhängiger Lichtextension und ein Verfahren zur Herstellung des Körpers bekannt, bei dem ebenfalls ein Matrixpolymer verwendet wird und eine thermotrope Komponente. Als Matrixpolymer werden dabei Polyester, Polyamid, Polyacrylacrylat, Polymethacrylat, Polystyrol, Silikonharz, Polyvinylchlorid oder Polyvenylchloridacrylnitril-Copolymere vorgeschlagen. Als thermotrope Komponenten werden hier ebenfalls Alkane und verwandte Verbindungen empfohlen.

Es hat sich nun gezeigt, daß die thermotropen Systeme nach den vorstehend erwähnten Dokumenten eine mangelhafte thermische Langzeitstabilität bzw. für ein Sonnenschutzsystem unzureichende Transmissionsverringerung aufweisen. Dies ist zum einen offensichtlich darauf zurückzuführen, daß die thermotropen Systeme über längere Dauer vorzeitig altern, wobei eine Entmischungszonenvergrößerung der eingelagerten Komponente eintritt, verursacht durch die Intrusion von Lösungsmittel und ein schwach ausgeprägtes Netzwerk, und zum anderen, daß die optischen Eigenschaften der beiden Komponenten nicht aufeinander abgestimmt sind.

Ausgehend von der DE 44 33 090 ist es die Aufgabe der vorliegenden Erfindung, ein Verfahren zur Herstellung eines thermotropen Systems vorzuschlagen, bei dem ein Werkstoff resultiert, dessen Eigenschaften auch unter Langzeitbedingungen anhalten, und eine entsprechende Verwendung anzugeben.

Die Aufgabe wird durch die kennzeichnenden Merkmale des Anspruchs 1 und in bezug auf die Verwendung durch die kennzeichnenden Merkmale des Anspruches 8 gelöst.

Erfindungsgemäß wird ein Verfahren vorgeschlagen, bei dem als Matrixkomponente ausschließlich schnellvernetzende Matrixpolymere, insbesondere Epoxidharze und ihre modifizierten Abkömmlinge, eingesetzt werden, deren optische Dichte auf die verwendete thermotrope Komponente abgestimmt ist (z.B. Brechungsindex der Matrix $1,5<n_d^{20}<1,58$ bei Verwendung von Paraffinen). Erfindungsgemäß werden unter schnellvernetzenden Matrixsystemen solche verstanden, die sich durch eine kurze Gelierzeit (t<30min) auszeichnen und binnen weniger Minuten ein ausgeprägtes Netzwerk mit einer hohen Vernetzungsdichte (Glasübergangstemperatur > 100°C) bilden. Dabei ist der Herstellungsprozeß so zu steuern, daß weder Lösungsmittel in das Netzwerk eingelagert wird noch ein Ausschwitzen der thermotropen Komponente vor der Vernetzung erfolgt.

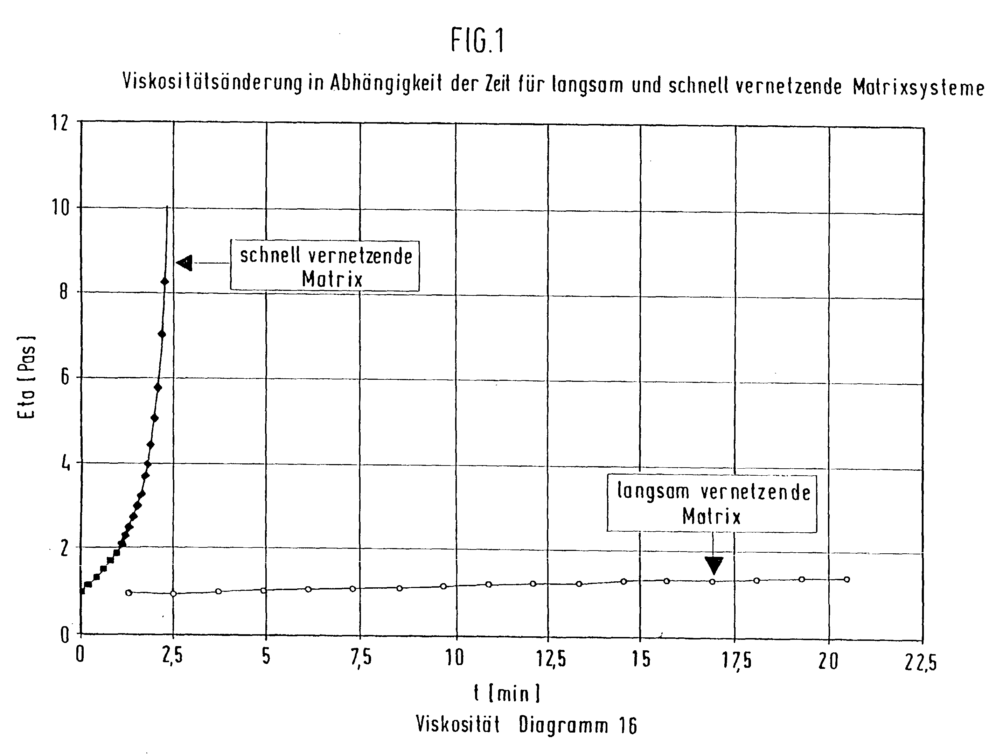

In Fig. 1 ist zum Vergleich die Veränderung der Viskosität während des Vernetzungsprozesses für ein langsam bzw. schnellvernetzendes System dargestellt. der Aufbau eines ausgeprägten Netzwerkes mit einer hohen Vernetzungsdichte spiegelt sich in einer erhöteh Glasübergangstemperatur wieder. Aus der Literatur **(Elias, H.-G.:** Makromoleküle, Bd. 1, 5. Aufl., S. 880-889, Basel 1990) ist bekannt, daß in Polymeren Migrationsprozesse von Gasen und niedermolekularen Substanzen oberhalb der Glasübergangstemperatur auftreten können. Bedingt durch Diffusion, Fluß in Poren oder Transport in gelöster Form können Permeationsprozesse hervorgerufen werden, die zu einer Entmischung führen. Ist die Vernetzungsgeschwindigkeit sehr viel kleiner als die Permeationsgeschwindigkeit, so kann bereits bei der Herstellung thermotroper Schichten eine Veränderung des Entmischungszustandes hervorgerufen werden, wodurch die Transmission sowie die Transmissionsreduktion negativ beeinflußt werden. Werden bei der Herstellung größere Mengen an Lösungsmittel in das Beschichtungssystem eingeschlossen (Lösungsmittelintrusion), so kann die thermotrope Komponente partiell gelöst werden, was den Permeationsvorgang wesentlich beschleunigt. Diese Prozesse führen bei thermotropen Systemen, wie sie beispielsweise in der DE 44 33 090 und in der EP 0 000 868 B1 aufgeführt sind, zu einer thermisch bedingten Alterung, die zu einer Verringerung der Transmissionsreduktion, d.h. der Schattierungwirkung, führt.

Unter Verwendung der erfindungsgemäßen schnellvernetzenden Matrixsysteme können transparente thermotrope Systeme erzeugt werden mit einer guten thermischen Langzeitbeständigkeit (bis zu einer Temperatur von ca. 100°C).

Zur Herstellung des thermotropen Systems erfolgt zuerst das Anlösen der thermotropen Komponente (z.B. Eicosan) in einer lösungsmittelhaltigen Matrix-Beschichtungslösung (z.B. modifizierter Epoxyester, 50%ig in Xylol), anschließend die Applikation der Formulierung auf z.B. transparenten Substraten mit Hilfe von lacktechnischen Beschichtungsprozessen wie Spritzen, Rakeln oder Fluten. Nachfolgend werden ein Abtrocknen des Lösungsmittels und eine simultane Vorvernetzung der thermotropen Schicht durch eine definierte Erwärmung durchgeführt, wobei die Trocknungsparameter Temperatur, Druck und Art der Wärmezufuhr so auf das System abzustimmen sind, daß die Vernetzungsgeschwindigkeit annähernd der Abdampfungsgeschwindigkeit des Lösungsmittels entspricht, um eine Lösungsmittelintrusion zu vermeiden. Die Verwendung eines Lösungsmittelgemisches, bestehend aus einem Niedrig-, Mittel- und Hochsieder, kann sich vorteilhaft auf das Trocknungsverhalten auswirken. Dabei muß die Trocknungstemperatur oberhalb der Temperatur sein, bei der die Phasenumwandlung der verwendeten thermotropen Sustanz (z.B. bei n-Eicosan T > 35 °C) eintritt. Nach Abschluß dieses Trocknungs- und Vorvernetzungsschrittes, der mit einer homogenen Eintrübung der Schicht begleitet ist, muß eine schnelle Abkühlung unterhalb der Schalttemperatur des Systems erfolgen (Abkühlungsgeschwindigkeit > 10 K/sec), um die Lösungsgeschwindigkeit und die Löslichkeit der thermotropen Substanz herabzusetzen und somit einem Ausschwitzen entgegenzuwirken. Gleichzeitig wird durch diesen Prozeßschritt eine homogene Verteilung feiner Kristallite der thermotropen Komponente mit einer durchschnittlichen Korngröße von ca. 1 μm erzielt, die

zu einer Verbesserung der Transparenz unterhalb der Schalttemperatur führen. Abschließend erfolgt eine Auslagerung bei einer Temperatur unterhalb der Schalttemperatur, bis die Vernetzung abgeschlossen ist.

Um die Alterungsbeständigkeit des Matrixmaterials hinsichtlich der UV-Stabilität zu verbessern, kann man auf handelsübliche Alterungsschutzmittel, z.B. Antioxidationsmittel (Staerylthiopropionat), UV-Absorber, Quencher oder HALS-Stabilisatoren, zurückgreifen, wobei letztere besonders zu bevorzugen sind.

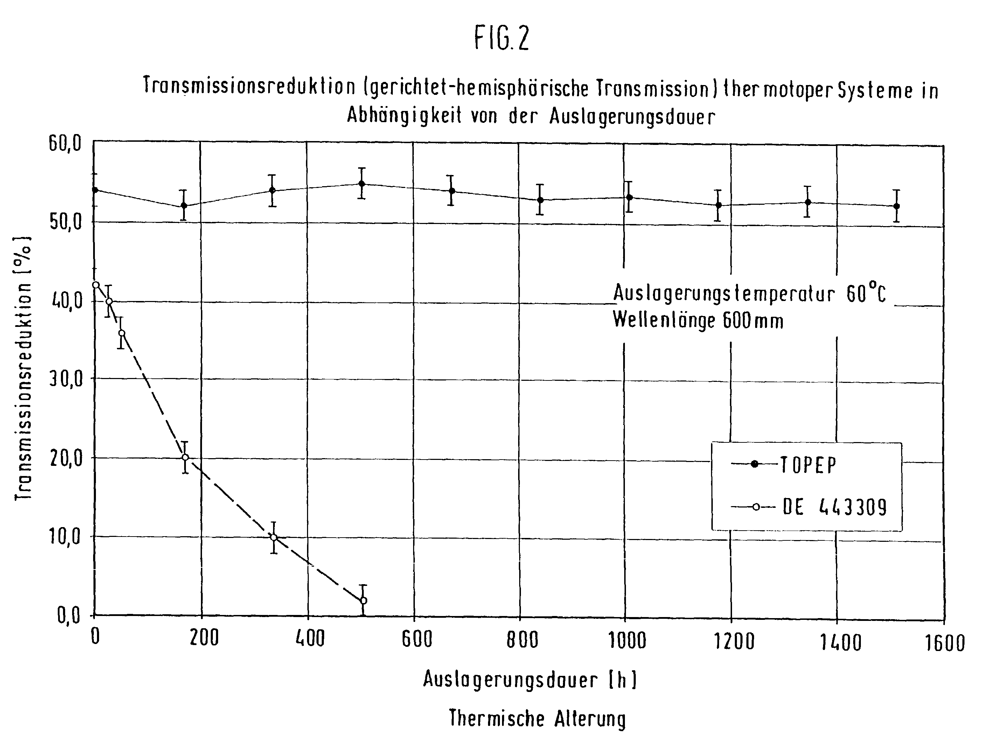

Zur Verdeutlichung der Auswirkung des oben beschriebenen Herstellungsverfahrens auf die thermische Langzeitbeständigkeit ist in Fig. 2 die Veränderung der Transmissionsreduktion, verursacht durch eine thermische Alterung zweier unterschiedlicher thermotroper Schichten dargestellt. Deutlich sichtbar ist die Abnahme der Transmissionsreduktion des langsam vernetzenden Systems, wie es in der DE 44 33 090 beschrieben ist. Im Gegensatz dazu ist bei der erfindungsgemäßen thermotropen Beschichtung (TOPEP), die mit Hilfe des erfindungsgemäßen Herstellungsverfahrens angefertigt wurde, keine signifikante Veränderung festzustellen.

Beim erfindungsgemäßen Verfahren ist es besonders bevorzugt, wenn ein thermotropes System aus n-Eicason- und Ricinen-modifiziertem Epoxidharz hergestellt wird, dessen Vernetzung peroxidisch initiiert wird oder durch die Zugabe von aminischen bzw. isocyanatbasierenden Härtern erfolgt.

Beim erfindungsgemäßen Verfahren ist es bevorzugt, wenn das Epoxidharz in dem festen Polymerwerkstoff mit einem Gewichtsanteil von 70-98 Gew.% enthalten ist und das Alkan mit einem entsprechenden Anteil von 2-30 Gew.%. Bevorzugt besteht der Polymerwerkstoff aus 80-85 Gew.% Epoxidharz und 15-20 Gew.% Alkan.

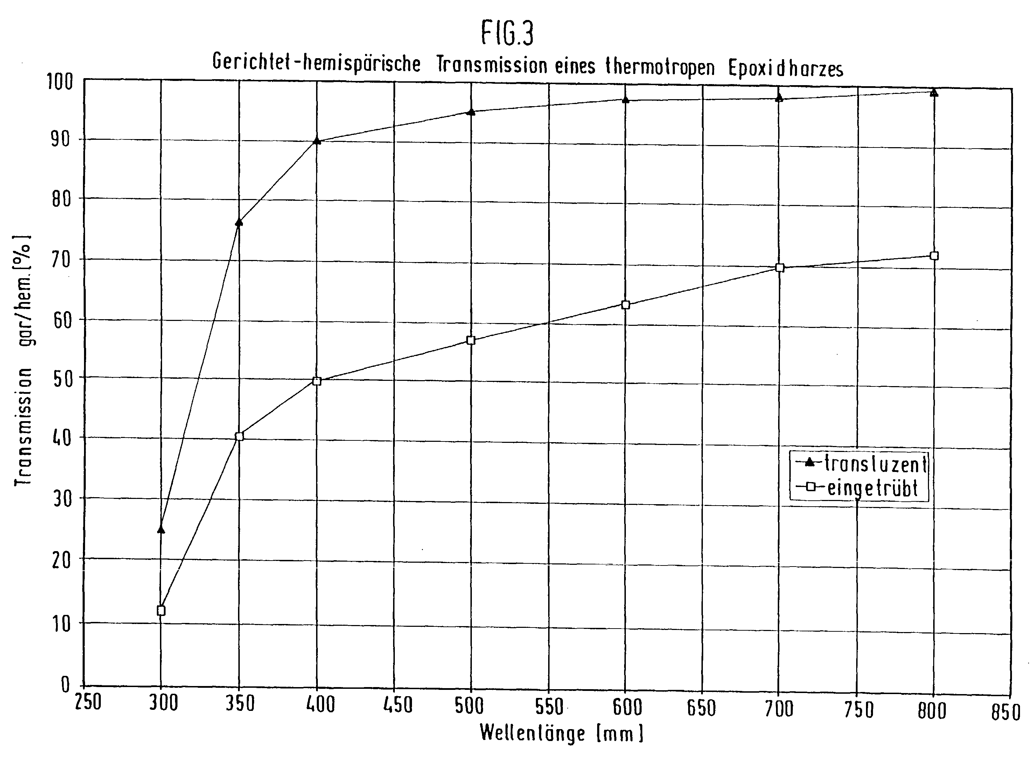

Das vorstehend beschriebene Herstellungsverfahren für das thermotrope System zeichnet sich besonders dadurch aus, daß der Trübungseffekt nicht nur durch chemische Bindungen bzw. Reaktionen und/oder chemische Wechselwirkungen erreicht wird, sondern durch die Änderung des relativen Brechungsindex der beiden Komponenten. Besonders hervorzuheben ist, daß das modifizierte Epoxidharz des oben erläuterten Systems das Alkan während der Applikation schnell mit seinem Netzwerk vollständig umschließt und somit die Brown'sche Beweglichkeit durch die hohe Vernetzungsdichte stark einschränkt. Dadurch resultiert eine überraschend hohe, auch in Kenntnis des Standes der Technik nicht zu erwartende thermische Langzeitstabilität von mindestens 24 Monaten ohne Verlust der Eigenschaften. Offensichtlich erfolgt bei der erfindungsgemäßen Formulierung keine thermisch bedingte Größenveränderung der Entmischungszonen. Des weiteren zeichnet sich das beschriebene System dadurch aus, daß die optische Dichte des Matrixpolymers unterhalb der Schalttemperatur nahezu dem des eingelagerten Alkans entspricht. Dies führt in Verbindung mit der Stabilität der Entmischungszonengröße zu einer Steigerung der Transmissionsreduktion, da neben dem relativen Brechungsindex der beiden Komponenten auch die Entmischungszonengröße eine maßgebliche Rolle für die Lichtstreuung und somit für die Transmissionsreduktion spielt (**N.J. Mills**: Optical Properties, Encyclopaedia of Polymer Science and Engineering, 10, S. 493 Wiley, New York, 1988). In Figur 3 wird dies verdeutlicht durch Darstellung der Ergebnisse für die gerichtet-hemisphärische Transmissionsmessung einer ca. 80 µm starken Schicht in Abhängigkeit von der Wellenlänge für die beiden unterschiedlichen Transmissionszustände. Damit bildet das erfindungsgemäß hergestellte System eine thermisch bis ca. 100°C beständige thermotrope Funktionsschicht mit einer hohen gleichbleibenden reversiblen Reduktion der Transmission beim Überschreiten der entsprechenden Schalttemperatur.

Nachfolgend wird dies anhand von vier Beispielen näher erläutert:

**Beispiel 1**

160 Gewichtsteile einer styrolisierten ricinenhaltigen 50%igen (Xylol) Epoxidharzlösung (Jägalyd VE 34, Fa. Jäger) werden mit 20 Gewichtsanteilen n-Eicosan versetzt. Die Homogenisierung erfolgt bei 40 °C unter intensivem Rühren (ca. 0,5 h). Nach der Initiierung mit 2 Gewichtsanteilen Dibenzoylperoxid (Interox BP 50 FT, Fa. Peroxid-Chemie) wird die Beschichtungslösung auf das Substrat, z.B. 3 mm starke, gereinigte Floatglasscheiben, mit Hilfe eines Beschichtungsautomaten als 125 µm starker Film aufgebracht. Die Trocknung der beschichteten Glasscheiben erfolgt: bei 80 °C und ca. 970 mbar innerhalb von 1,5 min. Nach der Trocknung werden die Proben mit einer Kühlrate von ca. 20 K/sec auf ca. 10 °C abgekühlt und etwa zwölf Stunden bei dieser Temperatur gelagert. Bis zur Weiterverarbeitung wird das so entstandene Produkt bei Raumtemperatur magaziniert. Für den mechanischen Schutz der thermotropen Beschichtung wird auf diese ein Deckfilm (Desmodur Z, Bayer AG) appliziert, der bei Raumtemperatur getrocknet werden kann. Zur Herstellung von thermotropen Verbundgläsern werden zwei beschichtete Floatglasscheiben mit Hilfe von lösungsmittelfreien Epoxidharzen und den entsprechenden Härtern verklebt.

**Beispiel 2**

160 Gewichtsteile einer styrolisierten ricinenhaltigen 50%igen (Xylol) Epoxidharzlösung (Jägalyd VE 34, Fa. Jäger) werden mit 20 Gewichtsteilen n-Eicosan versetzt. Die Homogenisierung des thermotropen Systems erfolgt bei 40 °C. Nach der Initiierung mit 2 Gewichtsteilen Cyclohexanonperoxid (Katalysator 30, Fa. Röhm) wird die Beschichtungslösung auf das Substrat, z.B. gesäuberte Polycarbonat-Stegplatten (Wandstärke ca. 1 mm), mit Hilfe einer Spiralrakel als 125 µm starker Film aufgebracht. Die Trocknung der beschichteten Stegplatten erfolgt bei 80 °C, ca. 970 mbar, innerhalb von 50 sec. Nach der Trocknung werden die Proben mit einer Kühlrate von ca. 20 K/sec auf ca. 10 °C abgekühlt und etwa 12 Stunden bei dieser Temperatur expositioniert. Bis zur Weiterverarbeitung wird das so entstandene Produkt bei Raumtemperatur gelagert. Zum Schutz vor mechanischen Beanspruchungen können die thermotropen Beschichtungen mit einem transparenten Deckfilm (Desmodur Z, Bayer AG) versehen werden.

**Beispiel 3**

160 Gewichtsteile einer ricinenhaltigen 50%igen (Xylol) Epoxidharzlösung (Jägalyd ED 4, Fa. Jäger) werden mit 20 Gewichtsteilen n-Eicosan versetzt. Die Homogenisierung erfolgt bei 40 °C. Dem System wird ein cycloaliphatischer aminischer Härter (Epilink 420, AKZO) zugesetzt. Nach erneuter Homogenisierung wird die Beschichtungslösung mit Hilfes eines Kontaktwalzverfahrens auf ein transparentes Substrat, z.B. gesäuberte Polyesterfolie, appliziert. Die Trocknung geschieht bei 80 °C, 970 mbar innerhalb von ca. 15 min. Nach der Trocknung werden die Proben mit einer Kühlrate von ca. 20 K/sec auf ca. 10 °C abgekühlt und etwa 12 Stunden getempert. Bis zur Weiterverarbeitung wird das so entstandene Produkt bei Raumtemperatur gelagert. Zum Schutz vor mechanischen Beanspruchungen kann auf die thermotropen Beschichtungen ein Deckfilm appliziert werden, oder zwei thermotrop beschichtete Folien werden mit Hilfe von lösungsmittelfreien, transparenten Klebstoffen zu thermotropen Verbundfolien laminiert.

**Beispiel 4**

160 Gewichtsteile einer ricinenhaltigen 50%igen (Xylol) Epoxidharzlösung (Jägalyd ED 4, Fa. Jäger) werden mit 20 Gewichtsteilen n-Eicosan versetzt. Die Homogenisierung erfolgt bei 40 °C. Dem System wird ein lösungsmittelfreier Härter auf Isocyanat-Basis (Desmodur N 100, Bayer) zugesetzt und mit DBTDL (Dibutylzinndilaurat, Fa. Merck) katalysiert. Nach wiederholtem Homogenisieren wird die Beschichtungslösung auf gereinigte 3 mm Floatglasscheiben aufgerakelt.

Die Trocknung der beschichteten Substrate erfolgt bei 80 °C innerhalb von 1,5 min. Nach der Trocknung werden die Proben mit einer Kühlrate von ca. 20 K/sec auf ca. 10 °C abgekühlt und etwa 12 Stunden bei dieser Temperatur getempert. Bis zur Weiterverarbeitung wird das so entstandene Produkt bei Raumtemperatur ca. eine Woche gelagert. Anschließend werden mit Hilfe von lösungsfreien Epoxidharzen und den entsprechenden Härtern thermotrope Verbundglasscheiben hergestellt.

**Patentansprüche**

1. Verfahren zum Herstellen eines thermooptischen Polymerwerkstoffes, enthaltend mindestens ein Matrixpolymer, das mindestens eine mit dem Matrixpolymer nicht mischbare, durch Temperaturänderung in seiner Struktur beeinflußbare monomere Verbindung einschließt, wobei das Matrixpolymer und die monomere Verbindung so ausgewählt sind, daß ihre Brechungsindices im Temperaturbereich unterhalb der für die Strukturänderung maßgeblichen Temperatur bis zur Temperatur der Strukturänderung der monomeren Verbindung annähernd gleich sind und somit der Polymerwerkstoff in diesem Temperaturbereich transluzent oder transparent ist,
**gekennzeichnet durch**

   a) Lösen der monomeren Verbindung in einer ein schnellvernetzendes Matrixpolymer enthaltenden lösungsmittelhaltigen Matrix-Beschichtungslösung, wobei das Matrixsystem eine Gelierzeit t < 30 min auf weist,

   b) Applizieren der Beschichtungslösung auf ein Substrat,

   c) Abtrocknen des Lösungsmittels und simultane Vorvernetzung, wobei die Trocknungsparameter wie Temperatur, Druck und Art der Wärmezufuhr so ausgewählt sind, daß die Vernetzungsgeschwindigkeit annähernd der Abdampfungsgeschwindigkeit des Lösungsmittels entspricht und die Trocknungstemperatur oberhalb der Temperatur liegt, bei der die Phasenumwandlung der eingesetzten monomeren Verbindung (thermotrope Substanz) liegt,

   d) Schnelle Abkühlung unterhalb der Schalttemperatur des Systems mit einer Abkühlgeschwindigkeit von > 10 K/sec und Lagerung zur Endvernetzung.

2. Verfahren nach Anspruch 1,
**dadurch gekennzeichnet, daß** die Applikation (Verfahrensschritt b) durch Spritzen, Rakeln oder Fluten erfolgt.

3. Verfahren nach Anspruch 1 oder 2,
**dadurch gekennzeichnet, daß** als monomere Verbindung ein Alkan der allgemeinen Formel $C_nH_{2n+2}$ mit n = 10 bis 25 eingesetzt wird.

4. Verfahren nach mindestens einem der Ansprüche 1 bis 3,
**dadurch gekennzeichnet, daß** das Alkan n-Eicosan ist.

**5.** Verfahren nach mindestens einem der Ansprüche 1 bis 4, **dadurch gekennzeichnet, daß** der Matrix-Beschichtungslösung UV-Stabilisatoren zugesetzt werden.

**6.** Verfahren nach mindestens einem der Ansprüche 1 bis 5, **dadurch gekennzeichnet, daß** als Matrixpolymer ein schnellvernetzendes Epoxidharz eingesetzt wird.

**7.** Verfahren nach Anspruch 6, **dadurch gekennzeichnet, daß** das Epoxidharz mit Ricinen modifiziert ist.

**8.** Verwendung des thermooptischen Polymerwerkstoffes, hergestellt nach einem Verfahren nach den Ansprüchen 1 bis 7, **dadurch gekennzeichnet, daß** er als Sichtschutz oder Schattierung in Form einer Beschichtung auf transparenten Bauteilen, z. B. aus Glas oder Kunststoff, mit einer Schichtstärke von 10 μm bis 1 cm eingesetzt wird.

**Claims**

**1.** Method for producing a thermo-optical polymerised material, containing at least one matrix polymer, which includes at least one monomer compound which is non-mixable with the matrix polymer and in its structure affected by temperature changes, and the matrix polymer and the monomer compound are selected in such a way that their refractory indices in the temperature range below the temperature affecting the change in structure and up to the temperature of the change in structure of the monomer compound are virtually equal so that the polymerised material is in this temperature range translucent or transparent, **characterised by**

    a) dissolving the monomer compound in a matrix coating solution which contains a rapidly bonding matrix polymer which contains a solvent, and the matrix system has a gelling period t < 30 mins;

    b) application of the coating solution to a substrate;

    c) drying the solvent and simultaneous pre-bonding, and the drying parameters such as temperature, pressure and type of heat delivery are chosen so that the bonding speed corresponds virtually with the evaporation speed of the solvent and the drying temperature lies above the temperature of the phase conversion of the applied monomer compound (thermotrop substance);

    d) rapid cooling below the switch temperature of the system with a cooling speed of >10 K/sec and storage for final bonding.

**2.** Method according to Claim 1, **characterised in that** the application (procedural stage b) is by way of spraying, doctoring or flooding.

**3.** Method according to Claim 1 or 2, **characterised in that** the applied monomer compound is an alkane of the general formula $C_nH_{2n+2}$ where n = between 10 and 25.

**4.** Method according to at least one of Claims 1 to 3, **characterised in that** the alkane is n-Eicosan.

**5.** Method according to at least one of Claims 1 to 4, **characterised in that** UV-stabilisers are added to the matrix coating solution.

**6.** Method according to at least one of Claims 1 to 5, **characterised in that** the applied matrix polymer is a rapidly bonding epoxide resin.

**7.** Method according to Claim 6, **characterised in that:** the epoxide resin is modified with ricins.

**8.** Use of the thermo-optical polymer material produced by a method according to Claims 1 to 7, **characterised in that** it is used as vision protection or shading in the form of a coating on transparent assembly components, for example of glass or plastic, with a layer thickness between 10 mm and 1 cm.

**Revendications**

**1.** Procédé de préparation d'un matériau polymère thermooptique contenant au moins une matrice polymère, qui inclut au moins un composé monomère non miscible à la matrice polymère et dont la structure est modifiable par des changements de température, la matrice polymère et le composé monomère étant choisis de façon à ce que leurs indices de rupture dans la zone de température comprenant toutes les températures situées en dessous de la température de référence pour la modification de la structure du composé monomère jusqu'à cette température, soient sensiblement égaux et qu'ainsi le matériau polymère soit translucide ou transparent dans cette zone de température, ledit procédé étant **caractérisé par** les étapes consistant à :

    a) dissoudre un composé monomère dans une solution d'enduction matricielle contenant des solvants et une matrice polymère à réticulation rapide, le système matriciel présentant un temps de gélification t<30 min,

b) appliquer la solution d'enduction sur un substrat,

c) sécher le solvant et, simultanément, réaliser une pré-réticulation, les paramètres de séchage, comme la température, la pression et le type d'adduction de chaleur étant choisis de façon à ce que la vitesse de réticulation. corresponde sensiblement à la vitesse d'évaporation du solvant et que la température de séchage se situe au-dessus de la température à laquelle le changement de phase du composé monomère mis en oeuvre (substance thermotrope) s'opère,

d) réaliser un refroidissement rapide en dessous de la température de transformation du système à une vitesse de refroidissement > 10 K/sec, et un stockage de façon à réaliser la réticulation finale.

2. Procédé selon la revendication 1, **caractérisé en ce que** l'application (étape b du procédé) se fait par injection, par étalement ou par immersion.

3. Procédé selon la revendication 1 ou selon la revendication 2, **caractérisé en ce qu'**on met en oeuvre, à titre de composé monomère, un alcane de formule générale $C_nH_{2n+2}$ avec n= de 10 à 25.

4. Procédé selon l'une au moins des revendications 1 à 3, **caractérisé en ce que** l'alcane est le neicosane.

5. Procédé selon au moins l'une des revendications 1 à 4, **caractérisé en ce que** des stabilisateurs d'U. V. sont ajoutés à la solution d'enduction matricielle.

6. Procédé selon au moins l'une des revendications 1 à 5, **caractérisé en ce qu'**une résine époxy à réticulation rapide est utilisée à titre de matrice polymère.

7. Procédé selon la revendication 6, **caractérisé en ce que** la résine époxy est modifiée avec du ricin.

8. Utilisation d'un matériau polymère thermooptique, obtenu selon le procédé de l'une des revendications 1 à 7, **caractérisée en ce que** ledit matériau est mis en oeuvre, à une épaisseur de 10 µm à 1 cm à titre de protection contre les regards ou de teintage sous la forme d'un revêtement sur des éléments de bâtiment, notamment en verre ou en plastique.

# FIG.1

Viskositätsänderung in Abhängigkeit der Zeit für langsam und schnell vernetzende Matrixsysteme

schnell vernetzende Matrix

langsam vernetzende Matrix

Eta [Pas]

t [min]

Viskosität Diagramm 16

EP 0 946 443 B1

FIG. 2

Transmissionsreduktion (gerichtet-hemisphärische Transmission) thermotoper Systeme in Abhängigkeit von der Auslagerungsdauer

Auslagerungstemperatur 60°C
Wellenlänge 600 mm

● TOPEP
○ DE 443309

Auslagerungsdauer [h]

Thermische Alterung

EP 0 946 443 B1

# FIG.3

### Gerichtet-hemispärische Transmission eines thermotropen Epoxidharzes

EP 0 946 443 B1